# EUROPEAN PATENT APPLICATION

(11) **EP 4 572 252 A1**
(43) Date of publication of application: **18.06.2025**
(21) Application number: 22954370.7
(22) Date of filing: 09.08.2022
(51) Int. Cl.: H04L 27/00

(54) **INFORMATION PROCESSING METHOD, SYSTEM AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); LIU, Jianning, Beijing 100085 (CN); MAO, Yuxin, Beijing 100085 (CN)
(74) Representative: Stöckeler, Ferdinand
(86) International application number: PCT/CN2022/111285
(87) International publication number: WO 2024/031394

(57) **Abstract**

Embodiments of the present disclosure provide an information processing method, system and apparatus, a communication device, and a storage medium. The information processing method is executed by a first network function, and comprises: receiving an actively dropped downlink data packet marked by an access network device during QoS handling based on a PDU set; and performing charging offset of downlink data on the basis of the downlink data packet, or reporting the usage of the downlink data packet to a second network function, the usage being used for performing charging offset of downlink data.

## Description

### FIELD

The present disclosure relates to the field of wireless communication technologies but is not limited to the field of wireless communication technologies, and in particular relates to a method, a system and an apparatus for processing information, a communication device and a storage medium.

### BACKGROUND

In the related art, for the charging procedure of services such as mobile data services, a general quality of service (QoS) mechanism is often used for processing. However, for multimedia services with various differentiated data flows, a radio access network (RAN) may actively drop some data packets in a specific scenario, such that the final charging result is inaccurate.

### SUMMARY

Embodiments of the present disclosure provide a method and an apparatus for processing information, a communication device and a storage medium.

According to a first aspect of embodiments of the present disclosure, there is provided a method for processing information, performed by a first network function, including:
receiving a downlink data packet actively dropped and labeled by an access network device in a procedure of packet data unit (PDU) set based QoS handling; and
performing a charging offset of downlink data based on the downlink data packet, or reporting a usage of the downlink data packet to a second network function, in which the usage is configured to perform the charging offset of the downlink data.

According to a second aspect of embodiments of the present disclosure, there is provided a method for processing information, performed by a second network function, including:
receiving a usage of a downlink data packet, reported by a first network function, actively dropped and labeled in a procedure of PDU set based QoS handling; and
performing a charging offset of downlink data based on the usage.

According to a third aspect of embodiments of the present disclosure, there is provided a method for processing information, performed by an access network device, including:
sending a downlink data packet actively dropped and labeled in a procedure of PDU set based QoS handling to a first network function, in which the downlink data packet is configured to perform a charging offset of downlink data.

According to a fourth aspect of embodiments of the present disclosure, there is provided a system for processing information, including:
a first network function configured to receive a downlink data packet actively dropped and labeled by an access network device in a procedure of PDU set based QoS handling; and perform a charging offset of downlink data based on the downlink data packet, or report a usage of the downlink data packet to a second network function;
a second network function configured to receive the usage of the downlink data packet reported by the first network function; and perform the charging offset of the downlink data based on the usage; and
an access network device configured to send the downlink data packet actively dropped and labeled in the procedure of the PDU set based QoS handling to the first network function.

According to a fifth aspect of embodiments of the present disclosure, there is provided an apparatus for processing information, including:
a processing unit configured to receive a downlink data packet actively dropped and labeled by an access network device in a procedure of PDU set based QoS handling; and perform a charging offset of downlink data based on the downlink data packet, or report a usage of the downlink data packet to a second network function, in which the usage is configured to perform the charging offset of the downlink data.

According to a sixth aspect of embodiments of the present disclosure, there is provided an apparatus for processing information, including:
a performing unit configured to receive a usage of a downlink data packet, reported by a first network function, actively dropped and labeled in a procedure of PDU set based QoS handling; and perform a charging offset of downlink data based on the usage.

According to a seventh aspect of embodiments of the present disclosure, there is provided an apparatus for processing information, including:
a sending unit configured to send a downlink data packet actively dropped and labeled in a procedure of PDU set based QoS handling to a first network function, in which the downlink data packet is configured to perform a charging offset of downlink data.

According to an eighth aspect of embodiments of the present disclosure, there is provided a communication device, including: a processor; a memory; and an executable program stored on the memory and capable of being run by the processor, in which the processor, when running the executable program, performs the method for processing information provided in the first aspect, the second aspect or the third aspect.

According to a ninth aspect of embodiments of the present disclosure, there is provided a computer storage medium having an executable program stored therein, in which the executable program, when executed by a processor, implements the method for processing information provided in the first aspect, the second aspect or the third aspect.

With the technical solution provided by embodiments of the present disclosure, the downlink data packet actively dropped and labeled by the access network device in the PDU set based QoS handling is received; the charging offset of downlink data is performed based on the downlink data packet, or the usage of the downlink data packet is reported to the second network function; and the usage is configured to perform the charging offset of the downlink data. In this way, the first network function may accurately and quickly locate the dropped data packet by labeling the downlink data packet to be dropped by the access network device. Moreover, the usage of the downlink data packet is reported to the second network function, and the usage of the downlink data and the charging are offset according to the usage of the dropped data packet, such that the error of the charging procedure caused by dropping the data packet is reduced.

It is to be understood that both the foregoing general description and the following detailed description are illustrative and explanatory only and are not restrictive of embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of embodiments of the present disclosure.
FIG. 1 is a schematic diagram illustrating a wireless communication system according to an illustrative embodiment.
FIG. 2 is a schematic flowchart illustrating a method for processing information according to an illustrative embodiment.
FIG. 3 is a schematic flowchart illustrating a method for processing information according to an illustrative embodiment.
FIG. 4 is a schematic flowchart illustrating a method for processing information according to an illustrative embodiment.
FIG. 5 is a schematic flowchart illustrating a method for processing information according to an illustrative embodiment.
FIG. 6 is a schematic flowchart illustrating a method for processing information according to an illustrative embodiment.
FIG. 7 is a schematic flowchart illustrating a method for processing information according to an illustrative embodiment.
FIG. 8 is a schematic flowchart illustrating a method for processing information according to an illustrative embodiment.
FIG. 9 is a schematic block diagram illustrating an apparatus for processing information according to an illustrative embodiment.
FIG. 10 is a schematic block diagram illustrating an apparatus for processing information according to an illustrative embodiment.
FIG. 11 is a schematic block diagram illustrating an apparatus for processing information according to an illustrative embodiment.
FIG. 12 is a schematic block diagram illustrating a terminal according to an illustrative embodiment.
FIG. 13 is a schematic block diagram illustrating a communication device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the present disclosure. Instead, they are merely examples of apparatuses and methods consistent with some aspects of the present disclosure.

Terms used herein in embodiments of the present disclosure are only for the purpose of describing specific embodiments, but should not be construed to limit embodiments of the present disclosure. As used in the present disclosure, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

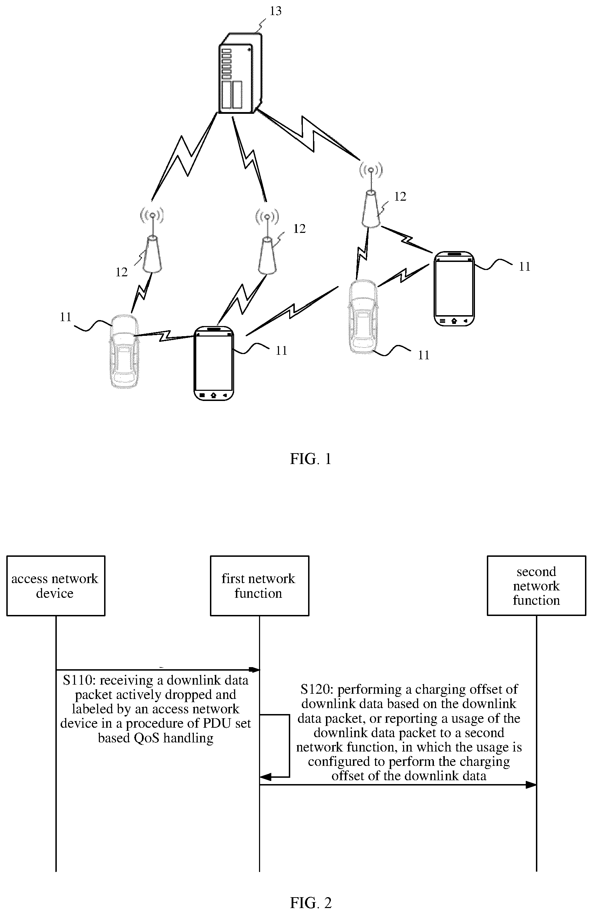

Referring to FIG. 1, which is a schematic diagram showing a wireless communication system provided by an embodiment of the present disclosure. As shown in FIG. 1, the wireless communication system is a communication system based on a cellular mobile communication technology, and may include several terminals 11 and several access devices 12.

The terminal 11 may be a device that provides voice and/or data connectivity to a user. The terminal 11 can communicate with one or more core networks via a radio access network (RAN). The terminal 11 can be an Internet of Things terminal, such as a sensor device, a mobile phone (or referred to as a "cellular" phone) and a computer with an Internet of Things terminal. For example, the terminal 11 can be a fixed, portable, pocket-sized, handheld, computer built-in or vehicle-mounted apparatus. For example, the terminal 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may also be a device of an unmanned aerial vehicle. Alternatively, the terminal 11 may also be a vehicle-mounted device, for example, an on-board computer with a wireless communication function, or a wireless communication device externally connected with an on-board computer. Alternatively, the terminal 11 may be a roadside device, such as a street lamp, a signal lamp or other roadside devices with a wireless communication function.

The access device 12 may be a network side device in the wireless communication system. The wireless communication system can be a 4th generation mobile communication (4G) system, also referred to as a long term evolution (LTE) system. Alternatively, the wireless communication system may also be a 5G system, also referred to as a new radio (NR) system or a 5G NR system. Alternatively, the wireless communication system may also be a next generation system of the 5G system. The access network in the 5G system can be referred to as a new generation-radio access network (NG-RAN), or a MTC system.

The access device 12 may be an evolved base station (eNB) used in the 4G system. Alternatively, the access device 12 may also be a centralized distributed architecture base station (gNB) in the 5G system. When the access device 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device 12 is not limited in the embodiments of the present disclosure.

A wireless connection can be established between the access device 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

Optionally, the wireless communication system may further include a network management device 13. Several access devices 12 are connected to the network management device 13. The network management device 13 may be a core network device in the wireless communication system, for example, the network management device 13 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 13 is not limited in the embodiments of the present disclosure.

As shown in FIG. 2, embodiments of the present disclosure provide a method for processing information, performed by a first network function, including the following steps.

In step S110, a downlink data packet actively dropped and labeled by an access network device in a procedure of PDU set based QoS handling is received.

In step S120, a charging offset of downlink data based on the downlink data packet is performed, or a usage of the downlink data packet is reported to a second network function, in which the usage is configured to perform the charging offset of the downlink data.

In embodiments of the present disclosure, the first network function may be a user plane function (UPF) and the access network device may be a radio access network (RAN) node. The PDU set is a set including one or more data packets corresponding to the PDU, and the PUU set based QoS handling may be performed based on an established or modified PDU session, in which the PDU session may be configured to establish a connection between a user equipment (UE) and a data network (DN). For example, a PDU session is implemented via the UPF.

In an embodiment, the downlink data may include one or more data flows, and each data flow may be associated with a QoS flow, or may be associated with multiple QoS flows, in which the data flow associated with the QoS flow may include one or more PDU sets. For example, a data flow may be associated with a QoS flow corresponding to a QoS parameter according to a QoS parameter or the like corresponding to each data flow, or each data unit in a data flow may be associated with a QoS flow corresponding to a QoS parameter according to a QoS parameter corresponding to a different data unit included in each data flow.

Here, the data flows may be the same or different types of data flows included in the downlink data. For example, for a multimedia service such as extended reality (XR), the downlink data may include a multi-modal data flow such as an audio data flow, a video data flow, and a haptic sensation data flow. These data flows, which may be data input from the same device or different devices (e.g. sensors) describing the same service, may be output to one or more device terminals for processing or application.

The various data flows of multi-modal data have a correlation, such as synchronization of audio and video data flows, synchronization of haptic and visual data flows, and the like. There is always a certain correlation between the data flows of multimedia services, such as XR, and the demand of these data flows for network transmission. The effective identification and utilization of these correlations will be more conducive to the transmission and control of networks and services, and also more conducive to the service guarantee and user experience.

In an embodiment, the PDU set based QoS handling may be QoS handling performed according to QoS parameters corresponding to one or more PDU sets. The QoS parameters corresponding to different PDU sets may be the same or different, and each QoS flow may be configured to transmit one or more PDU sets, and therefore QoS flows associated for classifying the PDU sets may also be the same or different.

Here, the QoS parameter corresponding to each PDU set may indicate at least one of:
a PDU set handling indication, indicating whether to activate a handling operation based on the PDU set for the data flow; for example, the PDU set handling indication may be implicitly indicated by other information of the PDU set provided by the application function (AF);
whether an application layer needs all PDUs in a case of using the PDU set;
a PDU set delay budget (PSDB); in which a delay may be a PDU set delay between the UE and the UPF, and the PDU set with a delay exceeding the PSDB will be actively dropped; or
a PDU set error rate (PSER); for example, it may include an error rate corresponding to PDU set transmission failure or repeated transmission, etc.

In an embodiment, the PDU set based QoS handling may be QoS handling performed according to at least one of dependency between the PDU sets, importance between the PDU sets, or a priority order between the PDU sets. The dependency between the PDU sets may be a level of dependency between the PDU sets, e.g. representing different levels of dependency by values of one or more bits, etc. The importance between PDU sets may be a level of importance between the PDU sets, e.g. representing different levels of importance by the values of one or more bits, etc.

In an embodiment, the PDU set based QoS handling may be the QoS handling performed according to at least one of the dependency between different data packets included in the PDU set, the importance between the different data packets, or the priority order between the different data packets.

In this way, according to a QoS requirement relationship between the data flows or between the data packets in the data flows, such as dependency, importance or priority, the flexibility and accuracy for performing the QoS handling may be better improved, and the poor effect and low accuracy for QoS handling caused by adopting a common QoS mechanism may be reduced.

In an embodiment, the downlink data packet actively dropped by the access network device may be a data packet dropped in a downlink data packet dropping operation actively performed by the access network device according to a certain trigger condition. For example, the downlink data packet actively dropped by the access network device does not include a downlink data packet dropped by the access network device indicated by other network functions or devices. For example, the downlink data packet actively dropped by the access network device may include a PDU set actively dropped by the access network device or a downlink data packet in the PDU set actively dropped.

In an embodiment, a trigger condition for the access network device actively dropping the PDU set may include at least one of:
reaching the PSDB of the PDU set, resulting in that the PDU set is actively dropped;
reaching the PSER of the PDU set, resulting in that the PDU set is actively dropped;
transmission failure of a main PDU set determined according to the dependency of the PDU sets resulting in that a dependent PDU set of the main PDU set is actively dropped; or
transmission failure of an important PDU set determined according to the importance of the PDU sets resulting in that other PDU sets adjacent to or associated with the important PDU set are actively dropped.

In an embodiment, a trigger condition for the access network device actively dropping the downlink data packet in the PDU set may include at least one of:
reaching a packets delay budget of the downlink data packet; in which the delay may be a delay of the data packet between the UE and the UPF;
reaching a packets error rate of the downlink data packet, resulting in actively dropping the downlink data packet; in which the error rate may include an error rate corresponding to PDU set transmission failure or repeated transmission, etc.;
transmission failure of a main downlink data packet determined according to the dependency of the downlink data packet, resulting in that dependent downlink data packet of the main downlink data packet are actively dropped; or
transmission failure of an important downlink data packet determined according to the importance of the downlink data packet, resulting in that other downlink data packets adjacent to or associated with the important downlink data packet are actively dropped.

In an embodiment, the downlink data packet actively dropped and labeled by the access network device may be a downlink data packet to be actively dropped and labeled by the access network device. For example, the downlink data packet to be actively dropped is labeled as a "dropped data packet" or the like. A label may be a tag or identification information added to the downlink data packet. After obtaining the labeled downlink data packet, the first network function may determine the dropped data packet requiring the charging offset in the downlink data according to the label.

In an embodiment, the charging offset of the downlink data being performed based on the downlink data packet may be that a total usage for charging the downlink data may be offset based on a usage of the downlink data packet actively dropped and labeled. For example, a charging is performed by subtracting the usage of the downlink data packet actively dropped and labeled from the total usage for charging the downlink data.

In an embodiment, the second network function may be a session management function (SMF). The first network function may support performing the charging offset of the downlink data, or may support reporting the usage of the downlink data packet actively dropped and labeled by the access network device to the second network function, and the second network function performs the charging offset of the downlink data based on the usage.

In an embodiment, indicating the second network function to perform the charging offset of the downlink data based on the usage of the downlink data packet may be that a charging offset request message carrying the usage of the downlink data packet is sent in a case of reporting the usage of the downlink data packet to the second network function, to indicate the second network function to perform the charging offset based on the usage.

In this way, in the PUD set based QoS handling, by labeling the downlink data packet to be dropped by the access network device, the first network function may accurately and quickly locate the dropped data packet, the usage of the downlink data and the charging are offset according to the usage of the dropped data packet, such that the error of the charging procedure caused by dropping the data packet is reduced.

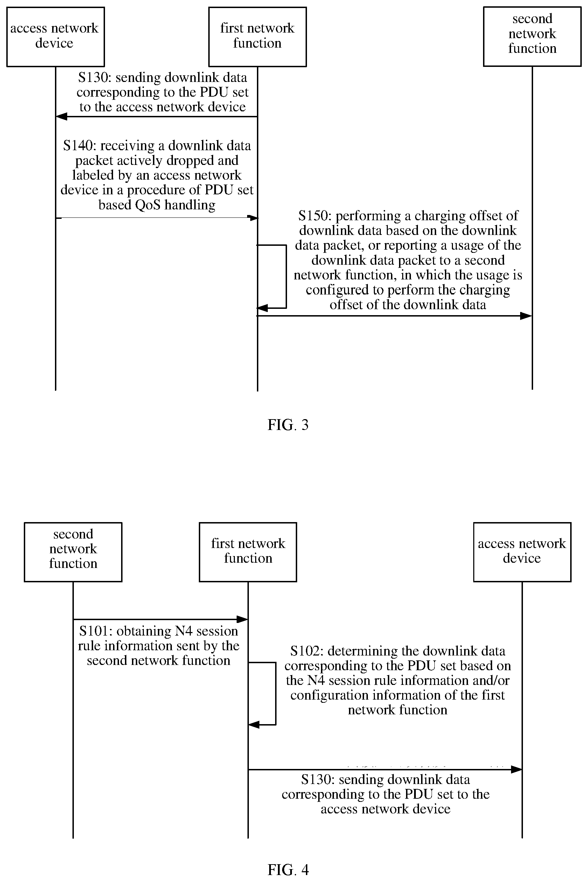

As shown in FIG. 3, embodiments of the present disclosure provide a method for processing information, performed by a first network function, including the following steps.

In step S130, downlink data corresponding to a PDU set is sent to an access network device.

In step S140, a downlink data packet actively dropped and labeled by the access network device in a procedure of QoS handling performed based on the downlink data corresponding to the PDU set is received.

In step S150, a charging offset of the downlink data based on the downlink data packet is performed, or a usage of the downlink data packet is reported to a second network function, in which the usage is configured to perform the charging offset of the downlink data.

In embodiments of the present disclosure, the downlink data corresponding to the PDU set may include first data information in the PDU set and second data information between PDU sets. The first data information in the PDU set may include at least one of following parameters:
a serial number (SN) of the PDU set; for example, a QoS flow is identified by an ID of the QoS flow, and each PDU set in the QoS flow is identified by the SN of the PDU set; each QoS flow may be configured to transmit one or more PDU sets;
a start PDU and/or an end PDU of the PDU set;
a PDU SN of a PDU included in the PDU set; or
a number of PDUs included in the PDU set.

In an embodiment, the second data information between the PDU sets may include at least one of following parameters:
importance of the PDU set, for example, a level of importance of the PDU sets; or
dependency of the PDU set, for example, a level of dependency between the PDU sets.

In an embodiment, a manner used by a UPF to obtain the downlink data corresponding to the PDU set may be at least one of:
through matching a header and payload of a realtime transport protocol or a secure-realtime transport protocol (RTP/SRTP);
through a new RTP extension header;
through information provided in an N6 encapsulation header of an access (AS), for example, GPRS tunnelling protocol for the user plane (GTP-U);
through detection based on a traffic feature; or
through UPF implementation of a non-standardized mechanism.

In an embodiment, the usage of downlink data packet may be a usage of a received downlink data packet actively dropped and labeled by an access network device, for example, the usage may be 500M, 800M or 1G, etc.

In an embodiment, the charging offset of the downlink data being performed based on the downlink data packet may be that a total usage for charging the downlink data may be offset based on a usage of the downlink data packet actively dropped and labeled. For example, a charging is performed by subtracting the usage of the downlink data packet actively dropped and labeled from the total usage for charging the downlink data.

In some embodiments, as shown in FIG. 4, the method further includes the following steps.

In step S101, N4 session rule information sent by a second network function is obtained; and
In step S102, a downlink data corresponding to a PDU set is determined based on the N4 session rule information and/or configuration information of a first network function.

In embodiments of the present disclosure, the second network function may be an SMF, and the N4 session rule information may be rule information of N4 connection established between the second network function SMF, and the first network function UPF. The N4 session rule information may be determined by the SMF based on policy and charging control (PCC) rule information.

In an embodiment, the N4 session rule information may carry charging offset indication and/or charging offset information indicated by the second network function to the first network function. The charging offset information may indicate a subject that performs charging offset. In a case where the subject is the first network function, the first network function will perform the charging offset of the downlink data. In a case where the subject is the second network function, a usage of a downlink data packet labeled is report to the second network function, indicating the second network function to perform the charging offset of the downlink data.

In an embodiment, the first network function UPF may perform a PDU set based QoS handling according to the N4 session rule information.

In an embodiment, the configuration information of the first network function may be local configuration information of the first network function, such as local configuration information of the UPF. The first data information within the PDU set and the second data information between the PDU sets may be identified according to the N4 session rule information and/or the configuration information of the first network function.

In this way, the N4 session rule information indicated according to the second network function may more accurately control the PDU set based QoS handling, thereby improving the accuracy of charging offset.

In some embodiments, the first network function includes: the UPF; and the second network function includes: the SMF.

Embodiments of the present disclosure provide a method for processing information, performed by a first network function. The method may include the following steps.

In step S160: a charging offset indication and/or charging offset information of a third network function is obtained in an establishment or modification procedure of a PDU session, in which the charging offset indication indicates whether to perform a charging offset in a procedure of the PDU set based QoS handling, and the charging offset information indicates a performing mode of the charging offset.

In step S170: charging offset of downlink data is performed based on the charging offset indication and/or the charging offset information and a downlink data packet.

In embodiments of the present disclosure, the third network function may be a policy control function (PCF). The establishment of the PDU session may perform session management (SM) policy association based on the second network function SMF to complete the establishment. For example, the second network function SMF establishes SM policy association with the third network function PCF, thereby obtaining PCC rule information sent by the PCF.

In an embodiment, the modification of the PDU session may be completed based on SM policy association modification initiated by the third network function PCF, in which the SM policy association modification may be triggered according to a policy decision result or an instruction of an AF. The PCF may perform modification of the SM policy association and notify the second network function SMF of a result of the modification of the SM policy association.

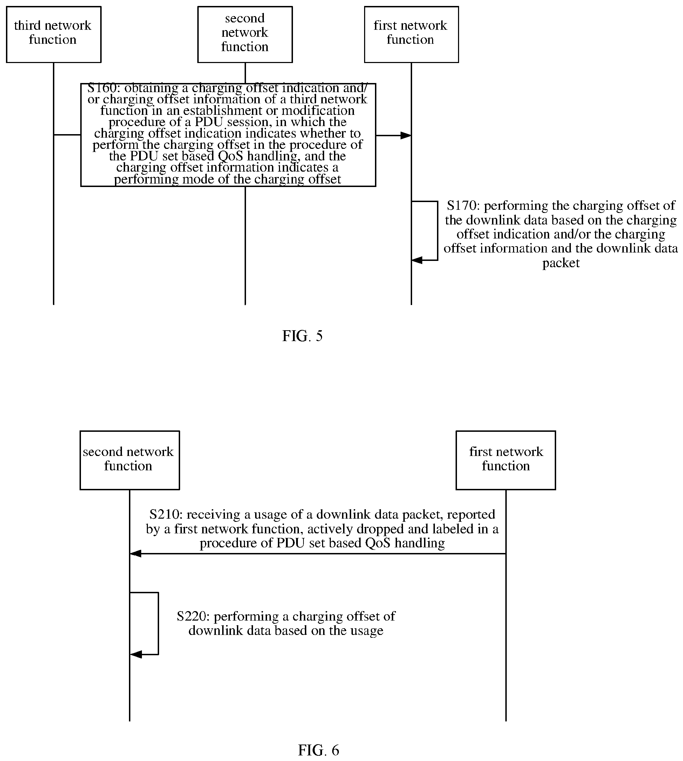

In an embodiment, as shown in FIG. 5, the charging offset indication and/or charging offset information may be issued by the third network function PCF, and the first network function may obtain the charging offset indication and/or charging offset information sent by the PCF via the second network function SMF. Accordingly, the access network device may also obtain the charging offset indication and/or charging offset information sent by the PCF via the SMF.

In an embodiment, the charging offset indication may indicate whether the charging offset is required or allowed in the PDU set based QoS handling. For example, a value of "charging offset indication" may be: charging offset or non-offset. The charging offset information may indicate a performing mode of the charging offset in the PDU set based QoS handling (for example, it may indicate a performing subject of the charging offset: the access network device or the UPF performing the charging offset). For example, the value of "charging offset indication" may be: the access network device performing the charging offset, or the UPF performing charging offset.

In an embodiment, performing the charging offset of the downlink data based on the charging offset indication and/or the charging offset information and the downlink data packet actively dropped and labeled by the access network device in a PDU set based QoS handling includes: based on the charging offset indication and/or the charging offset information, reporting a usage of the downlink data packet actively dropped and labeled by the access network device in the PDU set based QoS handling to the second network function, and indicating the second network function to perform the charging offset of the downlink data based on the usage of downlink data packet.

In some embodiments, the charging offset indication and/or the charging offset information is carried by at least one of:
a charging parameter in policy and charging control (PCC) rule information;
a charging parameter in policy information related to the PDU session; or
a charging parameter in policy information related to the PDU set.

In embodiments of the present disclosure, the charging parameter in the policy information related to the PDU set may include a QoS parameter related to the PDU set, such as a QoS parameter of the QoS handling based on the PDU set in 5GS. For example, the QoS parameter related to the PDU set may indicate at least one of:
a PDU set delay budget (PSDB); in which the delay may be a delay of the data packet between the UE and the UPF, and the PDU set with a delay exceeding the PSDB will be actively dropped;
a PDU set error rate (PSER); for example, it may include an error rate corresponding to PDU set transmission failure or repeated transmission, etc.;
whether an application layer needs all PDUs in a case of using the PDU set;
whether to drop the PDU set in a case where the PSDB is exceeded; or
a priority of the PDU set; in which the "priority of the PDU set" may be the same for all PDU sets (for example, the same as an existing priority order of a QoS flow) or different for each PDU set (for example, the same as the "importance of the PDU set").

In some embodiments, the downlink data corresponding to the PDU set includes at least one of:
a set identifier of the PDU set;
a start PDU and/or an end PDU of the PDU set;
a PDU identifier in the PDU set;
a number of PDUs in the PDU set;
importance of the PDU set; in which the importance may be a level of the importance of the PDU set, for example, represented by an importance identifier; or
dependency of the PDU set; in which the dependency may be a level of the dependency with a main PDU set, for example, represented by a dependency identifier. The higher the dependency with the main PDU set, the larger a value corresponding to the dependency identifier may be, etc.

In some embodiments, the method may further include:
one or more data flows included in the downlink data respectively associated with one or more QoS flows based on the importance of the PDU set, in which the QoS flow is configured to perform the PDU set based QoS handling.

In embodiments of the present disclosure, each data flow may be associated with the QoS flow, or may be associated with multiple QoS flows, in which the data flow associated with the QoS flow may include one or more PDU sets. For example, a data flow may be associated with a QoS flow corresponding to a QoS parameter according to a QoS parameter or the like corresponding to each data flow, or each data unit in a data flow may be associated with a QoS flow corresponding to a QoS parameter according to a QoS parameter corresponding to a different data unit included in each data flow.

As shown in FIG. 6, embodiments of the present disclosure provide a method for processing information, performed by a second network function, including the following steps.

In step S210, a usage of a downlink data packet, reported by a first network function, actively dropped and labeled in a procedure of PDU set based QoS handling is received.

In step S220, a charging offset of downlink data based on the usage is performed.

In embodiments of the present disclosure, the second network function may be an SMF, and may support receiving the usage of the downlink data packet reported by the first network function, and performs the charging offset of the downlink data based on the usage. The downlink data packet actively dropped and labeled in the procedure of PDU set based QoS handling is a downlink data packet actively dropped and labeled by the access network device in the procedure of PDU set based QoS handling.

In an embodiment, step S210 may include: receiving a charging offset request message sent by the first network function carrying the usage of the downlink data packet actively dropped and labeled in the procedure of PDU set based QoS handling.

In an embodiment, the PDU set based QoS handling may be QoS handling performed according to QoS parameters corresponding to one or more PDU sets. The QoS parameters corresponding to different PDU sets may be the same or different, and each QoS flow may be configured to transmit one or more PDU sets, and therefore QoS flows associated for classifying the PDU sets may also be the same or different.

Here, the QoS parameter corresponding to each PDU set may indicate at least one of:
a PDU set handling indication, indicating whether to activate a handling operation based on the PDU set for the data flow; for example, the PDU set handling indication may be implicitly indicated by other information of the PDU set provided by the application function (AF);
whether an application layer needs all PDUs in a case of using the PDU set;
a PDU set delay budget (PSDB); in which a delay may be a PDU set delay between the UE and the UPF, and the PDU set with a delay exceeding the PSDB will be actively dropped; or
a PDU set error rate (PSER); for example, it may include an error rate corresponding to PDU set transmission failure or repeated transmission, etc.

In an embodiment, the PDU set based QoS handling may be QoS handling performed according to at least one of dependency between the PDU sets, importance between the PDU sets, or a priority order between the PDU sets. The dependency between the PDU sets may be a level of dependency between the PDU sets, e.g. representing different levels of dependency by values of one or more bits, etc. The importance between PDU sets may be a level of importance between the PDU sets, e.g. representing different levels of importance by the values of one or more bits, etc.

In an embodiment, the PDU set based QoS handling may be the QoS handling performed according to at least one of the dependency between different data packets included in the PDU set, the importance between the different data packets, or the priority order between different data packets.

In this way, according to a QoS requirement relationship between the data flows or between the data packets in the data flows, such as dependency, importance or priority, the flexibility and accuracy for performing the QoS handling may be better improved, and the poor effect and low accuracy for QoS handling caused by adopting a common QoS mechanism may be reduced.

In an embodiment, the downlink data packet actively dropped by the access network device may be a data packet dropped in a downlink data packet dropping operation actively performed by the access network device according to a certain trigger condition. For example, the downlink data packet actively dropped by the access network device does not include a downlink data packet dropped by the access network device indicated by other network functions or devices. For example, the downlink data packet actively dropped by the access network device may include a PDU set actively dropped by the access network device or a downlink data packet in the PDU set actively dropped.

In an embodiment, a trigger condition for the access network device actively dropping the PDU set may include at least one of:
reaching the PSDB of the PDU set, resulting in that the PDU set is actively dropped;
reaching the PSER of the PDU set, resulting in that the PDU set is actively dropped;
transmission failure of a main PDU set determined according to the dependency of the PDU sets resulting in that a dependent PDU set of the main PDU set is actively dropped; or
transmission failure of an important PDU set determined according to the importance of the PDU sets resulting in that other PDU sets adjacent to or associated with the important PDU sets are actively dropped.

In an embodiment, a trigger condition for the access network device actively dropping the downlink data packet in the PDU set may include at least one of:
reaching a packets delay budget of the downlink data packet;
reaching a packets error rate resulting in actively dropping the downlink data packet;
transmission failure of a main downlink data packet determined according to the dependency of the downlink data packet, resulting in that dependent downlink data packet of the main downlink data packet are actively dropped; or
transmission failure of an important downlink data packet determined according to the importance of the downlink data packet, resulting in that other downlink data packets adjacent to or associated with the important downlink data packet are actively dropped.

In an embodiment, the downlink data packet actively dropped and labeled by the access network device may be a downlink data packet to be actively dropped and labeled by the access network device. For example, the downlink data packet to be actively dropped is labeled as a "dropped data packet" or the like. A label may be a tag or identification information added to the downlink data packet. After obtaining the labeled downlink data packet, the first network function may determine the dropped data packet requiring the charging offset in the downlink data according to the label.

In an embodiment, the charging offset of the downlink data being performed may be that a total usage for charging the downlink data may be offset based on a usage of the downlink data packet actively dropped and labeled. For example, a charging is performed by subtracting the usage of the downlink data packet actively dropped and labeled from the total usage for charging the downlink data.

In this way, in the PUD set based QoS handling, by labeling the downlink data packet to be dropped by the access network device, the first network function may accurately and quickly locate the dropped data packet, the usage of the downlink data and the charging are offset according to the usage of the dropped data packet, such that the error of the charging procedure caused by dropping the data packet is reduced.

In some embodiments, the method further includes:
receiving PCC rule information sent by a third network function in an establishment or modification procedure of a PDU session;
generating a QoS configuration file and N4 session rule information based on the PCC rule information;
sending the QoS configuration file to an access network device via an access and mobility management (AMF); and
sending the N4 session rule information to the first network function.

In embodiments of the present disclosure, the PCC rule information may be generated by the third network function PCF based on a QoS session establishment request sent by the AF. The AF may provide a QoS parameter of each PDU set corresponding to the QoS flow and a frame identification parameter to the PCF via the QoS session establishment request.

In an embodiment, the QoS parameter of each PDU set corresponding to the QoS flow may indicate at least one of:
a PDU set handling indication, indicating whether to activate a handling based on the PDU set for the data flow; for example, the PDU set handling indication may be implicitly indicated by related information of other PDU sets provided by an AF;
whether an application layer needs all PDUs in a case of using the PDU set;
a PDU set delay budget (PSDB); in which a delay may be a PDU set delay between the UE and the UPF, and the PDU set with a delay exceeding the PSDB will be actively dropped; or
a PDU set error rate (PSER); for example, it may include an error rate corresponding to PDU set transmission failure or repeated transmission, etc.

In some embodiments, the third network function may be configured to generate the PCC rule information based QoS parameter of each PDU set corresponding to the QoS flow. For example, the PCC rule information may carry the QoS parameters of each PDU set corresponding to the QoS flow. The SMF may generate a QoS configuration file based on the PCC rule information and send it to the access network device node via an Access and Mobility Management Function (AMF), and generate the N4 session rule information based on the PCC rule information and send it to the UPF.

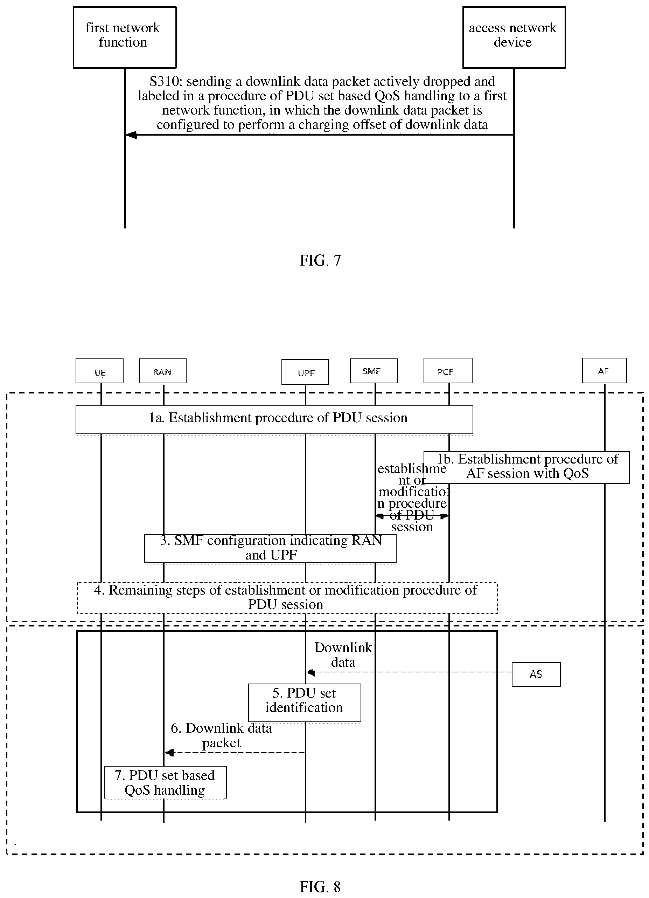

As shown in FIG. 7, embodiments of the present disclosure provide a method for processing information, performed by an access network device, including the following steps.

In step S310, a downlink data packet actively dropped and labeled in a procedure of PDU set based QoS handling is sent to a first network function, in which the downlink data packet is configured to perform a charging offset of downlink data.

In embodiments of the present disclosure, the first network function may be a UPF. The access network device may label a downlink data packet to be actively dropped, for example, labeled in a header of GPRS Tunnelling Protocol for the user plane (GTP-U) of the downlink data packet to identify the data packet as the data packet to be dropped.

In an embodiment, the access network device may send the labeled downlink data packet to a source UPF of the downlink data packet, such as PDU session anchor-UPF (PSA-UPF) to perform charging offset.

In an embodiment, the downlink data packet actively dropped by the access network device may be a dropping operation of the downlink data packet actively performed by the access network device based on a certain trigger condition, for example, it does not include a downlink data packet dropped by the access network device indicated by other network functions or devices. For example, the downlink data packet actively dropped by the access network device may include a PDU set actively dropped by the access network device or a downlink data packet in the PDU set actively dropped.

In an embodiment, a trigger condition for the access network device actively dropping the PDU set may include at least one of:
reaching the PSDB of the PDU set, resulting in that the PDU set is actively dropped;
reaching the PSER of the PDU set, resulting in that the PDU set is actively dropped;
transmission failure of a main PDU set determined according to the dependency of the PDU sets resulting in that a dependent PDU set of the main PDU set is actively dropped; or
transmission failure of an important PDU set determined according to the importance of the PDU sets resulting in that other PDU sets adjacent to or associated with the important PDU set are actively dropped.

In an embodiment, a trigger condition for the access network device actively dropping the downlink data packet in the PDU set may include at least one of:
reaching a packets delay budget of the downlink data packet;
reaching a packets error rate, resulting in actively dropping the downlink data packet;
reaching the PSER of the downlink data packet, resulting in actively dropping the downlink data packet;
transmission failure of a main downlink data packet determined according to the dependency of the downlink data packet, resulting in that a dependent downlink data packet of the main downlink data packet is actively dropped; or
transmission failure of an important downlink data packet determined according to the importance of the downlink data packet, resulting in that other downlink data packets adjacent to or associated with the important downlink data packet are actively dropped.

In an embodiment, the downlink data packet actively dropped and labeled by the access network device may be a downlink data packet to be actively dropped and labeled by the access network device. For example, the downlink data packet to be actively dropped is labeled as a "dropped data packet" or the like. A label may be a tag or identification information added to the downlink data packet. After obtaining the labeled downlink data packet, the first network function may determine the dropped data packet requiring the charging offset in the downlink data according to the label.

In some embodiments, the method may include:
obtaining a charging offset indication and/or charging offset information of a third network function; and
sending the downlink data packet actively dropped and labeled in the procedure of the PDU set based QoS handling to the first network function, based on the charging offset indication and/or the charging offset information.

In embodiments of the present disclosure, the access network device may obtain the charging offset indication and/or charging offset information sent by the third network function via the second network function SMF. The access network device may determine a subject for performing the charging offset based on the charging offset information, for example, the charging offset information may indicate the UPF to perform the charging offset, and then sending the downlink data packet actively dropped and labeled in the procedure of the PDU set based QoS handling to the first network function may include sending the downlink data packet actively dropped and labeled in the procedure of the PDU set based QoS handling to the first network function indicated by the charging offset indication and/or the charging offset information.

In some embodiments, sending the downlink data packet actively dropped and labeled in the procedure of the PDU set based QoS handling to the first network function includes:
receiving downlink data corresponding to the PDU set sent by the first network function;
receiving a QoS configuration file sent by a second network function via an AMF;
performing the PDU set based QoS handling based on the downlink data corresponding to the PDU set and the QoS configuration file; and
sending the downlink data packet actively dropped and labeled in the procedure of the PDU set based QoS handling to the first network function.

Embodiments of the present disclosure provide a system for processing information. The system may include:
a first network function configured to receive a downlink data packet actively dropped and labeled by an access network device in a procedure of PDU set based QoS handling; and perform a charging offset of downlink data based on the downlink data packet, or report a usage of the downlink data packet to a second network function;
a second network function configured to receive the usage of the downlink data packet reported by the first network function; and perform the charging offset of the downlink data based on the usage; and
an access network device configured to send the downlink data packet actively dropped and labeled in the procedure of the PDU set based QoS handling to the first network function.

In some embodiments, the system may further include:
a third network function configured to send PCC rule information to the second network function;
in which the second network function is further configured to send a QoS configuration file to the access network device based on the PCC rule information, and send N4 session rule information to the first network function;
the first network function is configured to send the downlink data corresponding to the PDU set to the access network device based on the N4 session rule information; and
the access network device is configured to perform the PDU set based QoS handling based on the downlink data corresponding to the PDU set and the QoS configuration file.

Embodiments of the present disclosure provide a method for charging offset in PDU set based QoS handling. The dropped data packet in the PDU set based QoS handling is labeled via RAN and is sent to a UPF. The UPF performs statistics and reporting of a usage of the charging. The usage of dropped data packet is subtracted from the usage of the charging to implement the charging offset.

The solution provided by this embodiment is at least applicable to scenarios such as usage-based charging, usage-time-combination based charging, usage-event combination based charging, usage-time-event combination based charging, and other scenarios. As shown in FIG. 8, the solution may specifically include the follows.

1a. An establishment procedure of a PDU session is performed.

1b. An AF may send information to a PCF via a "Nnef_AFsessionWithQoS_Create" request, which may include, for example, a QoS parameter of each PDU set in the QoS flow and a frame identification parameter. The AF may also provide these information to the 5G system (5GS) before the PDU session is established.

The QoS parameter of each PDU set corresponding to the QoS flow may indicate at least one of:
a PDU set handling indication, (indicating whether to activate a handling based on the PDU set for the data flow); in which the PDU set handling indication may be implicitly indicated by related information of other PDU sets provided by an AF;
whether an application layer needs all PDUs in a case of using the PDU set;
a PDU set delay budget; or
a PDU set error rate.

The frame identification parameter may include a burst period.

2. The PCF generates an appropriate PCC rule, which may include a QoS parameter related to the PDU set. The PCF sends the PCC rule to the SMF.

In an embodiment, the charging offset indication is sent by the PCF to the RAN and UPF to support the charging offset of the PDU set. The "charging offset indication" indicates whether the charging offset is required/allowed in the PDU set based QoS handling. A value of the "charging offset indication" may be: charging offset or non-offset.

In an embodiment, the charging offset information is sent by the PCF to the RAN and the UPF to support the charging offset of the PDU set. The "charging offset information" indicates a charging offset mode (for example, it may indicate that the RAN or UPF performs the charging offset). The PDU sets the QoS handling. The value of the "charging offset indication" may be: the RAN performing the charging offset, or the UPF performing the charging offset.

The charging offset indication and/or charging offset information may be issued in at least one of following manners:
1) carried and issued by a charging parameter in PCC rule information;
2) carried and issued by a charging parameter in policy information related to the PDU session; or
3) carried and issued by a charging parameter in policy information related to the PDU set.

The QoS parameter related to the PDU set is the QoS parameter of the PDU set based QoS handling in 5GS, and may also indicate at least one of:
a PDU set delay budget (PSDB);
a PDU set error rate (PSER);
whether an application layer needs all PDUs in a case of using the PDU set;
whether to drop the PDU set in a case where the PSDB is exceeded; or
a priority of the PDU set; in which the "priority of the PDU set" may be the same for all PDU sets (for example, the same as an existing priority order of a QoS flow) or different for each PDU set (for example, the same as the "importance of the PDU set").

This step is completed in an establishment or modification procedure of the PDU session.

In a case where this step is triggered by step 1b, the PCF generates the PCC rule according to the information provided by the AF.

3. The SMF generates a QoS configuration file and N4 rule based on the PCC rule from the PCF. The SMF sends the N4 rule to the UPF and sends the QoS configuration file to the RAN via the AMF.

In an embodiment, the SMF may also send the charging offset indication and/or charging offset information to the UPF and the RAN. The UPF or the RAN stores the charging offset indication and/or charging offset information.

In an embodiment, in a case where the charging offset information indicates that the UPF or the RAN is a performing subject, the UPF or the RAN confirms whether the charging offset of the PDU set is supported.

This step is completed in the establishment or modification procedure of the PDU session.

4. The remaining steps of the establishment or modification procedure of the PDU session are performed.

5. The UPF identifies related information based on the received N4 rule or UPF local configuration, and the PDU set based QoS handling is performed according to the N4 rule. In a case where the charging offset information indicates that the UPF is the performing subject, the UPF performs the charging offset on the corresponding dropped data packet of the PDU set (for example, performing usage statistics and charging offset on the charged data packets sent back by the RAN).

The UPF may identify PDUs belonging to the PDU set and the following information for each PDU set.

The information processed in the PDU set may include at least one of following parameters:
- a serial number (SN) of the PDU set; for example, a QoS flow is identified by an ID of the QoS flow, and each PDU set in the QoS flow is identified by the SN of the PDU set; each QoS flow may be configured to deliver one or more PDU sets;
- a start PDU and/or an end PDU of the PDU set;
- a PDU SN of a PDU included in the PDU set; or
- a number of PDUs included in the PDU set.

The information processed between PDU sets may include at least one of:
- importance of the PDU set; or
- dependency of the PDU set.

The UPF obtains the downlink data corresponding to the PDU set by using at least one of:
option 1: obtaining the downlink data corresponding to the PDU set through matching a header and payload of RTP/SRTP, in which the payload may be RFC 3550/6184/draft-ietf-avtext-framemarking, etc.;
option 2: a new RTP extension header;
option 3: information provided in an N6 encapsulation header of AS, for example, GTP-U;
option 4: detection based on a traffic feature; or
option 5: UPF implementation of a non-standardized mechanism.

6. The UPF provides the downlink data corresponding to the PDU set to the RAN.

In an embodiment, the importance of the PDU set may include:
option 1: the UPF classifies downlink data traffic and associates the downlink data traffic with different QoS flows based on the importance of the PDU set;
option 2: the UPF classifies downlink data traffic and associates the downlink data traffic with different sub-QoS flows based on the importance of the PDU set;
option 3: the UPF adds the importance of the PDU set to the GTP-U header.

For information related to other PDU sets in step 5, the UPF may add the information to the GTP-U header.

7. Based on the downlink data corresponding to the PDU set received in step 6, the RAN performs the PDU set based QoS handling.

The RAN performs the charging offset by labeling (e.g. a charging offset label) the downlink data packet to be dropped by the RAN (e.g. in the GTP-U header) and sending the labeled data packet back to the source UPF, e.g. a PDU session anchor-UPF (PSA-UPF).

The UPF may collect the labeled data packets and report the labeled data packets to the SMF as offset usage data. The UPF counts the labeled data packets as offset traffic and reports the usage of the labeled data packet to the SMF to perform the charging offset (e.g., the SMF subtracts the usage of the labeled data packet from the total usage of downlink data for performing the charging offset).

In an embodiment, a DL offset GTP-U data packet is sent back to the UPF from the RAN after being labeled.

The actively dropped PDU set or the data packet of the actively dropped PDU set may be:
1) actively dropping of the PDU set due to: exceeding PSDB of the PDU set, exceeding PSER of the PDU set, transmission failure of a dependent PDU set of a main PDU set due to the transmission failure of the main PDU set, other PDU sets adjacent to or associated with an important PDU set due to the transmission failure of the important PDU set; and
2) actively dropping of the data packet in the PDU set due to: exceeding a packets delay budget of the data packet in the PDU set, exceeding a packets error rate of the data packet in the PDU set, transmission failure of a dependent data packet of a main data packet due to the transmission failure of the main data packet, other data packets adjacent to or associated with an important data packet due to the transmission failure of the important data packet.

In some embodiments, the SMF may perform an SM policy association establishment procedure to establish an SM policy association with the PCF and obtain a default PCC rule of the PDU session. In a case where the SMF provides online SNPN, the GPSI, PVS-FQDN or PVS-IP address and online indication should be included. In a case where the request type in step 3 indicates "an existing PDU session", the SMF may provide information about the policy control request triggering condition that have been met by the SM policy association modification procedure initiated by the SMF, and the PCF may provide the policy information to the SMF.

In some embodiments, the PCF initiates an SM policy association modification operation, and the PCF performs the PCF-initiated SM policy association modification procedure to notify the SMF of the modification of the policy. The modification operation may be triggered by policy decision or AF request, such as the impact of the application function on traffic routing or the provision of port management information container by the AF.

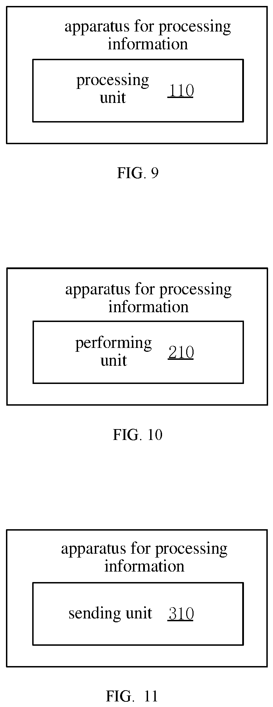

As shown in FIG. 9, embodiments of the present disclosure provide an apparatus for processing information, including:
a processing unit 110 configured to receive a downlink data packet actively dropped and labeled by an access network device in a procedure of PDU set based QoS handling; and perform a charging offset of downlink data based on the downlink data packet, or report a usage of the downlink data packet to a second network function, in which the usage is configured to perform the charging offset of the downlink data.

In some embodiments, the processing unit 110 is configured to:
send downlink data corresponding to the PDU set to the access network device;
receive a downlink data packet actively dropped and labeled by an access network device in a procedure of PDU set based QoS handling; and
perform a charging offset of downlink data based on the downlink data packet, or report a usage of the downlink data packet to a second network function.

In some embodiments, the processing unit 110 is further configured to:
obtain N4 session rule information sent by the second network function; and
determine the downlink data corresponding to the PDU set based on the N4 session rule information and/or configuration information of the first network function.

In some embodiments, the first network function includes: a UPF, and the second network function includes: an SMF.

In some embodiments, the processing unit 110 is configured to:
obtain a charging offset indication and/or charging offset information of a third network function in an establishment or modification procedure of a PDU session, in which the charging offset indication indicates whether to perform the charging offset in the procedure of the PDU set based QoS handling, and the charging offset information indicates a performing mode of the charging offset; and
perform the charging offset of the downlink data based on the charging offset indication and/or the charging offset information and the downlink data packet.

In some embodiments, the third network function includes: a policy control function (PCF).

In some embodiments, the charging offset indication and/or the charging offset information is carried by at least one of following parameters:
a charging parameter in policy and charging control (PCC) rule information;
a charging parameter in policy information related to the PDU session; or
a charging parameter in policy information related to the PDU set.

In some embodiments, the downlink data corresponding to the PDU set includes at least one of:
a set identifier of the PDU set;
a start PDU and/or an end PDU of the PDU set;
a PDU identifier in the PDU set;
a number of PDUs in the PDU set;
importance of the PDU set; or
dependency of the PDU set.

In some embodiments, the processing unit 110 is further configured to:
respectively associate one or more data flows included in the downlink data with one or more QoS flows based on the importance of the PDU set, in which the QoS flow is configured to perform the PDU set based QoS handling.

As shown in FIG. 10, embodiments of the present disclosure provide an apparatus for processing information, including:
a performing unit 210 configured to receive a usage of a downlink data packet, reported by a first network function, actively dropped and labeled in a procedure of PDU set based QoS handling; and perform a charging offset of downlink data based on the usage.

In some embodiments, the performing unit 210 is further configured to:
receive PCC rule information sent by a third network function in an establishment or modification procedure of a PDU session;
generate a QoS configuration file and N4 session rule information based on the PCC rule information;
send the QoS configuration file to an access network device via an access and mobility management (AMF); and
send the N4 session rule information to the first network function.

As shown in FIG. 11, embodiments of the present disclosure provide an apparatus for processing information, including:
a sending unit 310 configured to send a downlink data packet actively dropped and labeled in a procedure of PDU set based QoS handling to a first network function, in which the downlink data packet is configured to perform a charging offset of downlink data.

In some embodiments, the sending unit 310 is configured to:
obtain a charging offset indication and/or charging offset information of a third network function; and
send the downlink data packet actively dropped and labeled in the procedure of the PDU set based QoS handling to the first network function, based on the charging offset indication and/or the charging offset information.

In some embodiments, the sending unit 310 is configured to:
receive downlink data corresponding to the PDU set sent by the first network function;
receive a QoS configuration file sent by a second network function via an AMF;
perform the PDU set based QoS handling based on the downlink data corresponding to the PDU set and the QoS configuration file; and
send the downlink data packet actively dropped and labeled in the procedure of the PDU set based QoS handling to the first network function.

Embodiments of the present disclosure provide a communication device, including:
a memory for storing processor-executable instructions; and
a processor coupled to the memory;
in which the processor is configured to perform the method for processing information provided by any of the foregoing technical solutions.

The processor may include various types of storage media, which are non-transitory computer storage media that may continue to store information stored thereon after the communication device is powered off.

Here, the communication device includes a terminal or a network element, which may be any one of the first network element to the fourth network element.

The processor may be coupled to the memory via a bus or the like for reading the executable program stored on the memory, for example, at least one of the methods shown in FIGS. 2 to 10.

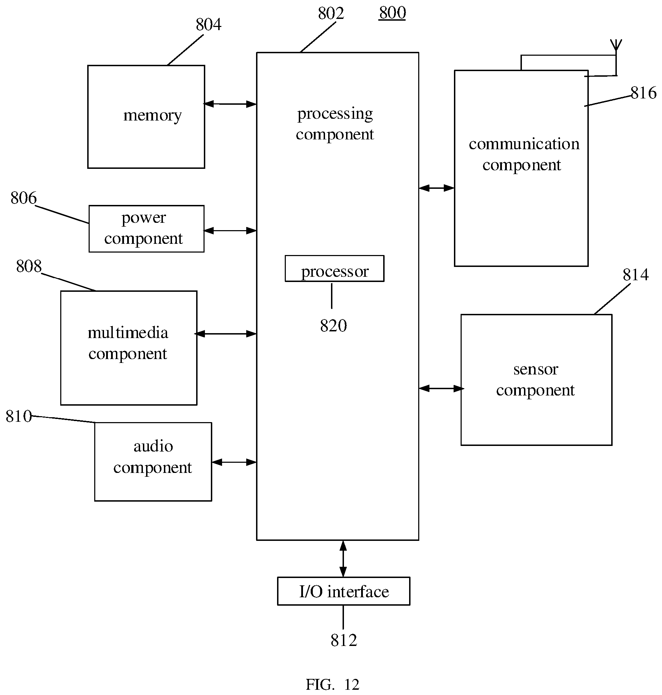

FIG. 12 is a schematic block diagram illustrating a terminal 800 according to an illustrative embodiment. For example, the terminal 800 may be a mobile phone, a computer, a digital broadcast user equipment, a messaging device, a game console, a tablet device, a medical device, a fitness device, a personal digital assistant, or the like.

Referring to FIG. 12, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to generate all or some of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button and the like. The button may include, but is not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In one illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 804) including instructions that, when executed by the processor 820 of the terminal 800, to generate any of the above-described methods. For example, the non-transitory computer-readable storage medium may be a ROM, a RAM, a CD-ROM, a magnetic tape, a floppy disc, an optical data storage device, and the like.

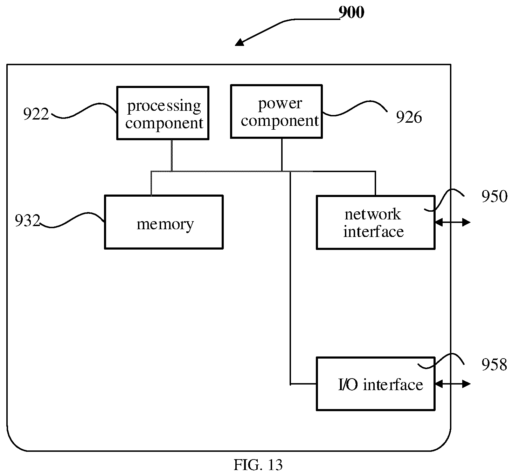

As shown in FIG. 13, an embodiment of the present disclosure illustrates a structure of a communication device 900. For example, the communication device 900 may be provided as a network-side device. The communication device 900 may be the aforementioned base station.

Referring to FIG. 13, the communication device 900 includes a processing component 922 and a memory resource represented by a memory 932. The processing component 922 may further include one or more processors. The memory resource is configured to store instructions executable by the processing component 922, such as an application program. The application program stored in the memory 932 may include one or more modules each corresponding to a set of instructions. In addition, the processing component 922 is configured to execute the instructions to perform the above method, i.e. any of the above-described methods performed by the base station. For example, at least one of the methods shown in FIGS. 2 to 10.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server TM, Mac OS XTM, Unix TM, Linux TM, Free BSDTM, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for processing information, performed by a first network function, comprising:
receiving a downlink data packet actively dropped and labeled by an access network device in a procedure of packet data unit (PDU) set based quality of service (QoS) handling; and
performing a charging offset of downlink data based on the downlink data packet, or reporting a usage of the downlink data packet to a second network function, wherein the usage is configured to perform the charging offset of the downlink data.

2. The method according to claim 1, further comprising:
sending downlink data corresponding to the PDU set to the access network device;
wherein the PDU set based QoS handling comprises:
a QoS handling performed based on the downlink data corresponding to the PDU set.

3. The method according to claim 2, further comprising:
obtaining N4 session rule information sent by the second network function; and
determining the downlink data corresponding to the PDU set based on the N4 session rule information and/or configuration information of the first network function.

4. The method according to claim 1, wherein the first network function comprises: a user plane function (UPF), and the second network function comprises: a session management function (SMF).

5. The method according to claim 1, further comprising:
obtaining a charging offset indication and/or charging offset information of a third network function in an establishment or modification procedure of a PDU session, wherein the charging offset indication indicates whether to perform the charging offset in the procedure of the PDU set based QoS handling, and the charging offset information indicates a performing mode of the charging offset;
wherein performing the charging offset of the downlink data based on the downlink data packet comprises:
performing the charging offset of the downlink data based on the charging offset indication and/or the charging offset information and the downlink data packet.

6. The method according to claim 5, wherein the third network function comprises: a policy control function (PCF).

7. The method according to claim 5, wherein the charging offset indication and/or the charging offset information is carried by at least one of:
a charging parameter in policy and charging control (PCC) rule information;
a charging parameter in policy information related to the PDU session; or
a charging parameter in policy information related to the PDU set.

8. The method according to claim 2, wherein the downlink data corresponding to the PDU set comprises at least one of:
a set identifier of the PDU set;
a start PDU and/or an end PDU of the PDU set;
a PDU identifier in the PDU set;
a number of PDUs in the PDU set;
importance of the PDU set; or
dependency of the PDU set.

9. The method according to claim 8, further comprising:
respectively associating one or more data flows comprised in the downlink data with one or more QoS flows based on the importance of the PDU set, wherein the QoS flow is configured to perform the PDU set based QoS handling.

10. A method for processing information, performed by a second network function, comprising:
receiving a usage of a downlink data packet, reported by a first network function, actively dropped and labeled in a procedure of PDU set based QoS handling; and
performing a charging offset of downlink data based on the usage.

11. The method according to claim 10, further comprising:
receiving PCC rule information sent by a third network function in an establishment or modification procedure of a PDU session;
generating a QoS configuration file and N4 session rule information based on the PCC rule information;
sending the QoS configuration file to an access network device via an access and mobility management (AMF); and
sending the N4 session rule information to the first network function.

12. A method for processing information, performed by an access network device, comprising:
sending a downlink data packet actively dropped and labeled in a procedure of PDU set based QoS handling to a first network function, wherein the downlink data packet is configured to perform a charging offset of downlink data.

13. The method according to claim 12, wherein sending the downlink data packet actively dropped and labeled in the procedure of the PDU set based QoS handling to the first network function comprises:
obtaining a charging offset indication and/or charging offset information of a third network function; and
sending the downlink data packet actively dropped and labeled in the procedure of the PDU set based QoS handling to the first network function, based on the charging offset indication and/or the charging offset information.

14. The method according to claim 12, wherein sending the downlink data packet actively dropped and labeled in the procedure of the PDU set based QoS handling to the first network function comprises:
receiving downlink data corresponding to the PDU set sent by the first network function;
receiving a QoS configuration file sent by a second network function via an AMF;
performing the PDU set based QoS handling based on the downlink data corresponding to the PDU set and the QoS configuration file; and
sending the downlink data packet actively dropped and labeled in the procedure of the PDU set based QoS handling to the first network function.

15. A system for processing information, comprising:
a first network function configured to receive a downlink data packet actively dropped and labeled by an access network device in a procedure of PDU set based QoS handling; and perform a charging offset of downlink data based on the downlink data packet, or report a usage of the downlink data packet to a second network function;
a second network function configured to receive the usage of the downlink data packet reported by the first network function; and perform the charging offset of the downlink data based on the usage; and
an access network device configured to send the downlink data packet actively dropped and labeled in the procedure of the PDU set based QoS handling to the first network function.

16. The system according to claim 15, further comprising:
a third network function configured to send PCC rule information to the second network function;
wherein the second network function is further configured to send a QoS configuration file to the access network device based on the PCC rule information, and send N4 session rule information to the first network function;
the first network function is configured to send the downlink data corresponding to the PDU set to the access network device based on the N4 session rule information; and
the access network device is configured to perform the PDU set based QoS handling based on the downlink data corresponding to the PDU set and the QoS configuration file.

17. An apparatus for processing information, comprising:
a processing unit configured to receive a downlink data packet actively dropped and labeled by an access network device in a procedure of PDU set based QoS handling; and perform a charging offset of downlink data based on the downlink data packet, or report a usage of the downlink data packet to a second network function, wherein the usage is configured to perform the charging offset of the downlink data.

18. An apparatus for processing information, comprising:
a performing unit configured to receive a usage of a downlink data packet, reported by a first network function, actively dropped and labeled in a procedure of PDU set based QoS handling; and perform a charging offset of downlink data based on the usage.

19. An apparatus for processing information, comprising:
a sending unit configured to send a downlink data packet actively dropped and labeled in a procedure of PDU set based QoS handling to a first network function, wherein the downlink data packet is configured to perform a charging offset of downlink data.

20. A communication device, comprising:
a processor;
a memory; and
an executable program stored on the memory and capable of being run by the processor,
wherein the processor, when running the executable program, performs the method according to any one of claims 1 to 9 or 10 to 11 or 12 to 14.

21. A computer storage medium having an executable program stored therein, wherein the executable program, when executed by a processor, implements the method according to any one of claims 1 to 9 or 10 to 11 or 12 to 14.
